# EUROPÄISCHE PATENTSCHRIFT

(11) **EP 2 536 796 B1**
(45) Veröffentlichungstag und Bekanntmachung des Hinweises auf die Patenterteilung: **18.10.2017**
(21) Anmeldenummer: 11700156.0
(22) Anmeldetag: 04.01.2011
(51) Int. Cl.: C09J 4/00, C08G 63/688, C08G 67/02, C09J 5/00

(54) **FUNKTIONSMATERIALIEN MIT STEUERBARER VISKOSITÄT**
FUNCTIONAL MATERIALS HAVING CONTROLLABLE VISCOSITY
MATÉRIAUX FONCTIONNELS PRÉSENTANT UNE VISCOSITÉ RÉGLABLE

(30) Priorität: 16.02.2010 DE 102010001992
(43) Veröffentlichungstag der Anmeldung: 26.12.2012
(73) Patentinhaber: Evonik Röhm GmbH, 64293 Darmstadt (DE)
(72) Erfinder: HILF, Stefan, 63517 Rodenbach (DE); SCHMIDT, Friedrich, Georg, 45721 Haltern am See (DE); HENNIG, Andre, 58456 Witten (DE); KRAUSE, Simon, 63743 Aschaffenburg (DE); BARNER-KOWOLLIK, Christopher, 76297 Stutensee (DE); INGLIS, Andrew, John, Blakehurst, NSW 2221 (AU); NEBHANI, Leena, Jaipur 302016 Rajasthan (IN)
(86) Internationale Anmeldenummer: PCT/EP2011/050041
(87) Internationale Veröffentlichungsnummer: WO 2011/101175

(56) Entgegenhaltungen:
- EP-A1- 2 166 030
- WO-A2-2010/144774
- JP-A- 2000 001 529
- US-A1- 2005 067 373
- US-B2- 6 933 361

## Beschreibung

### Gebiet der Erfindung

Die vorliegende Erfindung betrifft eine neuartige Methode zur Steuerung der Viskosität von beispielsweise Kleb- oder Beschichtungsformulierungen.

Die Viskositätssteuerungsmethode ermöglicht eine sehr schnelle thermoplastische Aushärtung einer Formulierung schon bei Raumtemperatur und eine deutliche Reduzierung der Viskosität bei höheren Temperaturen, so dass eine einfache Verarbeitbarkeit zurück gewonnen wird und z.B. die ursprünglich verklebten Substrate leicht wieder voneinander getrennt werden können. Dabei ist ein besonderer Aspekt, dass mehrere Zyklen einer thermoplastischen Aushärtung und einer deutlichen Viskositätsreduzierung mit dem vorliegenden System möglich sind.

### Stand der Technik

Methoden zur reversiblen Verknüpfung von Polymeren sind für ein breites Feld von Anwendungen von großem Interesse. Beispielsweise in Klebanwendungen sind diverse Möglichkeiten für die Automobilindustrie oder die Halbleiterindustrie beschrieben. Aber auch bei der Konstruktion von Maschinen, feinmechanischen Geräten oder in der Bauindustrie sind solche Klebstoffe interessant. Neben Klebanwendungen können reversibel verknüpfbare Polymere auch in Dichtstoffen, Beschichtungsmassen wie Lacken oder Farben oder bei der Herstellung von Formkörpern interessant sein.

In DE 198 32 629 und in DE 199 61 940 sind Verfahren beschrieben, bei denen Klebstoffe auf Epoxy-, Harnstoff-, (Meth)acrylat- oder Isocyanatbasis thermisch zersetzt werden. Die Klebstoffformulierung aus DE 199 61 940 enthält dazu eine thermisch instabile Substanz, die bei Erhitzen aktiviert wird. Die Klebschicht in DE 198 32 629 wird durch besonders hohen Energieeintrag zerstört. Die Desaktivierung der Klebschicht ist in beiden Fällen irreversibel.

In US 2005/0159521 bzw. in US 2009/0090461 ist ein Klebsystem beschrieben, das durch Bestrahlung mit aktinischer Strahlung radikalisch vernetzt und durch Ultraschall zerstört wird. Auch dieses Verfahren ist nach einem Klebezyklus irreversibel nicht mehr durchführbar.

In EP 2 062 926 sind in die Ketten eines Polyurethans für Klebanwendungen thermisch labile, sterisch gehinderte Harnstoffgruppen eingebaut, die durch Eintrag thermischer Energie zerstört werden und damit die Klebwirkung ausreichend zur Lösung der Verbindung reduziert wird.

In US 2009/0280330 ist ein wahrscheinlich mehrfach verwendbares Klebsystem beschrieben, das einen Zweischichtaufbau aufweist. Bei einer Schicht handelt es sich um eine Shape-Memory-Schicht, die thermisch flexibel oder gehärtet werden kann. Bei der anderen Schicht handelt es sich um einen Trockenkleber, der unterschiedliche Klebstärken in Abhängigkeit von der Struktur aufweist. Problem eines solchen Systems ist jedoch die aufwendig aufzubauende zweischichtige Struktur und die zu erwartende Restklebrigkeit nach Erhitzen der Shape-Memory- Schicht.

Unter dem Oberbegriff "Click Chemie" werden seit einigen Jahren vor allem in der akademischen Welt Methoden zum Aufbau von Blockcopolymeren erforscht. Dabei werden zwei unterschiedliche Homopolymere mit verknüpfbaren Endgruppen miteinander kombiniert und z.B. mittels einer Diels-Alder-Reaktion, Diels-Alder-analogen Reaktion bzw. einer anderen Cycloaddition miteinander verbunden. Ziel dieser Reaktion ist es, thermisch stabile, lineare und ggf. hochmolekulare Polymerketten aufzubauen. In Inglis et al. (Macromolecules 2010, 43, S.33-36) beispielsweise sind zu diesem Zweck Polymere mit Cyclopentadienylendgruppen, die aus mittels ATRP hergestellten Polymeren erhältlich sind, beschrieben. Diese Cyclopentadiengruppen können sehr rasch in Hetero-Diels-Alder Reaktionen mit Polymeren reagieren, welche elektronenarme Dithioester als Endgruppen tragen (Inglis et al. Angew. Chem. Int. Ed. 2009, 48, S. 2411-2414).

Die Verwendung von monofunktionellen RAFT-Polymeren zur Verknüpfung mit monofunktionellen Polymeren, die eine Dihydrothiopyran-Gruppe über eine Hetero-Diels-Alder-Reaktion findet sich in Sinnwell et al. (Chem. Comm. 2008, 2052-2054). Mit dieser Methode lassen sich AB-Diblockcopolymere realisieren. Schnelle Varianten dieser Hetero-Diels-Alder-Verknüpfung zur Synthese von AB-Blockcopolymeren mit einer nach einer RAFT-Polymerisation vorliegenden Dithioester-Gruppe und einer Dienyl-Endgruppe sind in Inglis et al. (Angew.Chem.Int.Ed. 2009, 48, S.2411-14) und in Inglis et al. (Macromol. Rapd Commun. 2009, 30, S.1792-98) beschrieben. Die analoge Herstellung von Multiarm-Sternpolymeren findet sich in Sinnwell et al. (J.Pol.Sci.: Part A: Pol.Chem. 2009, 47, S.2207-13).

In US 6,933,361 ist ein System zur Herstellung von einfach reparierbaren, transparenten Formkörpern beschrieben. Das System besteht aus zwei multifunktionellen Monomeren, die mittels einer Diels-Alder-Reaktion zu einem hochdichten Netzwerk polymerisieren. Dabei handelt es sich bei der einen Funktionalität um ein Maleinsäureimid und bei der anderen Funktionalität um ein Furan. Das thermische Schalten eines solchen hochdichten Netzwerks dient zur Reparatur desselbigen. Die Vernetzung findet bei Temperaturen oberhalb von 100 °C statt. Die partielle Rückreaktion erfolgt bei noch höheren Temperaturen.

Bei Syrett et al. (Polym.Chem. 2010, DOI: 10.1039/b9py00316a) werden Sternpolymere zur Verwendung als Fließverbesserer in Ölen beschrieben. Diese weisen mittels einer reversiblen Diels-Alder-Reaktion steuerbare, selbstheilende Eigenschaften auf. Dazu werden monofunktionelle Polymethacrylatketten mit Polymethacrylaten kombiniert, die in der Mitte der Kette, als Fragment des eingesetzten Initiators über eine in einer reversiblen Diels-Alder-Reaktion verwendbare Gruppe verfügen.

US 2005/067373 sowie auch die EP 2 166 030 offenbaren Diels Alder-Systeme, basierend auf Furanen und Maleinsäureanhydrid. Die Vernetzung eines solchen Systems erfolgt bei Temperaturen oberhalb von 100 °C. Die Entknüpfung der gebildeten Bindungen erfolgt entsprechend bei noch höheren Temperaturen. JP 2000 001529 offenbart Mercapto-funktionalisierte Furane, die die Diels-Alder-Vernetzungsreaktion bereits zwischen 50 und 100 °C eingehen. Jedoch liegt auch diese Reaktion noch deutlich lieber Raumtemperatur. WO 2010/144774 schließlich offenbart einen reversiblen Diels Alder-Mechanismus fur Klebanwendung. Jedoch muss auch hier fur die Vernetzung die Zusammensetzung erhitzt werden. Weiterhin offenbart auch die WO 2010/144774 im Detail ausschließlich die Kombination aus Furanen und Maleinsäureimiden.

### Aufgabe

Aufgabe der vorliegenden Erfindung ist die Bereitstellung einer neuen reversibel einsetzbaren Methode zur Steuerung von Viskositäten, die in unterschiedlichen Anwendungen und in einem breiten Formulierungsspektrum einsetzbar ist.

Insbesondere besteht die Aufgabe, eine reversible verwendbare Methode zur Verfügung zu stellen, die mehrfach, d.h. mindestens fünfmal ohne großen Eigenschaftsverlust schaltbar ist.

Darüber hinaus besteht die Aufgabe, eine reversible verwendbaren Methode zur Verfügung zu stellen, die bei geringen Temperaturen sehr schnell aktivierbar ist und unter Bedingungen, die unschädlich für die Formulierung und eventuell beschichtete Substrate sind, wieder deaktivierbar ist.

### Lösung

Gelöst wurden die Aufgaben durch Entwicklung eines neuartigen reversiblen schaltbaren Mechanismus, der unabhängig von den Formulierungsbestandteilen wie Bindemittel für verschiedenartige Polymere einsetzbar ist. Mit dem Mechanismus werden auch neue reversibel schaltbare Formulierungen zur Verfügung gestellt. Überraschend wurde gefunden, dass die gestellten Aufgaben durch eine Formulierung, gemäß Ansprüche 1 bis 8, die mittels einer Diels-Alder- oder einer Hetero-Diels-Alder-Reaktion schaltbar ist, gelöst werden können. Das erfindungsgemäße Schalten erfolgt durch die Kupplung von Polymeren und/oder Oligomeren und/oder niedermolekularen Verbindungen zu höhermolekularen Polymerketten unter einer ersten Bedingung, wie zum Beispiel einer ersten, niedrigeren Temperatur. Zum erfindungsgemäßen Schalten gehört darüber hinaus die Lösung dieser Kupplungsstellen unter einer zweiten Bedingung, wie zum Beispiel einer zweiten, höheren Temperatur. Es geht um eine reversibel schaltbare Formulierung gemäß Ansprüche 1 bis 8, dadurch gekennzeichnet, dass die Formulierung mittels einer Diels-Alder- oder einer Hetero-Diels-Alder-Reaktion schaltbar ist, dass die Formulierung eine Komponente A enthält, die zwei dienophile Doppelbindungen aufweist, dass die Formulierung eine Komponente B enthält, die zwei Dien-Funktionalitäten aufweist, dass mindestens eine der Komponenten A oder B als Polymer vorliegt, und dass die Formulierung bei Raumtemperatur hochmolekulare Polymerketten bildet und die hochmolekularen Polymerketten bei einer höheren Temperatur zu mindestens 50% wieder zu den Edukten und/oder zu kürzeren Kettensegmenten abgebaut werden, und dadurch gekennzeichnet, dass es sich bei dem Dienophil um eine Verbindung mit einer Kohlenstoff-Schwefel-Doppelbindung handelt. Für den Fall, dass es sich bei den Komponenten A und B jeweils um ein Polymer handelt, kann es sich bei diesen Polymeren verschiedene oder um gleiche, sich nur bezüglich der funktionellen Gruppen unterscheidende, Polymere handeln.

Bei den Polymeren kann es sich um Polyacrylate, Polymethacrylate, Polystyrole, Mischpolymerisate aus Acrylaten, Methacrylaten und/oder Styrolen, Polyacrylnitril, Polyether, Polyester, Polymilchsäuren, Polyamide, Polyesteramide, Polyurethane, Polycarbonate, amorphe oder teilkristalline Poly-α-Olefine, EPDM, EPM, hydrierte oder nicht hydrierte Polybutadiene, ABS, SBR, Polysiloxane und/oder Block-, Kamm- und/oder Sterncopolymeren dieser Polymere handeln. Diese Sternpolymere können über 30 Arme aufweisen. Die Zusammensetzung der Arme kann variieren und sich aus verschienden Polymeren zusammensetzen. Auch können diese Arme wiederum Verzweigungsstellen aufweisen. Die Kammpolymere können eine Blockstruktur aufweisen sowie variable Kammarme.

Die im Weiteren verwendete Schreibweise (Meth)acrylate steht für Alkylester der Acrylsäure und/oder der Methacrylsäure.

Ein besonderer Aspekt der Erfindung ist, dass die Formulierung bei Raumtemperatur schaltbar ist und die Kupplungsstellen bei einer höheren Temperatur zu mindestens 50% wieder gelöst werden. Insbesondere liegt die Formulierung bei Raumtemperatur in Form hochmolekularer Polymerketten vor. Diese hochmolekularen Polymerketten werden bei einer höheren Temperatur zu mindestens 50% wieder zu den Edukten und/oder zu kürzeren Kettensegmenten abgebaut. Dadurch erhält man eine thermoplastische Verarbeitbarkeit, z.B. zum Lösen einer Klebstelle oder Nachbearbeiten einer Formmasse, zurück. Es handelt sich bei dem Dienophil um eine Verbindung mit einer Kohlenstoff-Schwefel-Doppelbindung und damit bei der bevorzugten Vernetzungsreaktion um eine Hetero-Diels-Alder-Reaktion. Besonders bevorzugt handelt es sich bei dem Dienophil um einen Dithioester. Ganz besonders bevorzugt ist das Dienophil eine Verbindung mit der Struktur 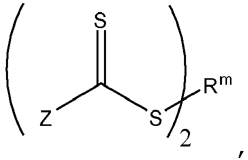 wobei es sich bei Z um eine stark Elektronen-ziehende Gruppe, bei R^{m} um eine zweibindige organische Gruppe, bevorzugt basierend auf verzweigten oder linearen alkylischen, aromatischen oder einer Kombination aus alkylischen und aromatischen bifunktionalen Alkoholen, bifunktionalen halogenierten Verbindungen, bifunktionalen Carbonsäuren oder bifunktionalen Aminen handelt. Alternativ kann es sich bei R^{m} auch um ein Polymer handeln. In diesem Fall befinden sich die Elektronen-ziehenden Gruppen bevorzugt an den beiden Kettenenden.

In einer bevorzugten Ausführungsform ist die Gruppe Z eine 2-Pyridylgruppe., eine Phosphorylgruppe oder eine Sulfonylgruppe. Des Weiteren kommen in Frage Cyano- oder Trifluoromethylgruppen sowie jede andere Gruppe Z, welche die Elektronendichte der C=S Doppelbindung sehr stark verringert und somit eine rasche Diels-Alder Reaktion erlaubt.

Überraschend wurde gefunden, dass diese Systeme bereits bei Raumtemperatur, unter optionaler Zugabe eines Katalysators, sehr schnell kuppeln. Genauso überraschend wurde gefunden, dass diese daraus resultierenden langkettigen Thermoplasten bereits bei sehr geringen Temperaturen von z.B. etwas über 80 °C wieder einfach und nahezu vollständig in einen kurzkettigen Thermoplasten zurückgeführt werden können. Darüber hinaus wurde sehr überraschend gefunden, dass daraufhin eine erneute Kupplung zu einem langkettigen Thermoplasten, ohne weitere Zugabe von einer der beiden Komponenten und/oder Katalysator, z.B. durch reines Abkühlen wieder erfolgen kann. Darüber hinaus ist es ein besonders überraschender Effekt, dass diese Zyklen aus Kuppeln und Rücküberführung in einen kurzkettigen Thermoplasten mindestens dreimal, bevorzugt mindestens fünfmal ohne einen größeren Eigenschaftsverlust der Formulierung durchgeführt werden können.

In einer bevorzugten Ausführungsform handelt es sich bei Komponente B um ein mittels Atomtransfer radikalische Polymersation (ATRP) hergstelltes, bifunktionelles Polymer. In diesem Fall erfolgt die Funktionalisierung mit den Diengruppen durch eine polymeranaloge oder während des Abbruchs durchgeführte Substitution endständiger Halogenatome. Diese Substitution kann beispielsweise durch Zugabe von mit Diengruppen funktionalisierten Mercaptanen erfolgen.

In der gleichen bevorzugten Ausführungsform kann als Komponente A eine niedermolekulare organische Verbindung mit 2 Dithioestergruppen, entsprechend der oberen Ausführung eine die Elektronendichte der C=S Doppelbindung stark verringernden Gruppe Z aufweisend, verwendet werden.

Ein weiterer Aspekt der vorliegenden Erfindung ist das Verfahren gemäß Ansprüche 9 bis 13 zur reversiblen Schaltung Bei der Durchführung dieses Verfahrens wird eine Formulierung aus zumindest zwei unterschiedlichen Komponenten A und B, mittels einer Diels-Alder- bzw. einer Hetero-Diels-Alder-Reaktion bei Raumtemperatur gekuppelt. In einem zweiten Verfahrensschritt werden bei einer höheren Temperatur mindestens 50%, bevorzugt mindestens 90% und besonders bevorzugt mindestens 99% der Kupplungsstellen mittels einer Retro-Diels-Alder- bzw. einer Retro-Hetero-Diels-Alder-Reaktion wieder gelöst.

Durch die Bildung langkettiger Thermoplasten nimmt die Viskosität der Formulierung, bis hin zu einem verschlaufungsbedingten physikalischen Netzwerk mit duro- bzw. elstomeren Eigenschaften, zu. Vorteil des vorliegenden Mechanismus ist dabei, dass bei dieser Aushärtung die reversibel schaltbare Formulierung im Gegensatz zu Systemen nach Stand der Technik gleichzeitig thermoplastische Eigenschaften behält. Darüber ist der Vorteil eines reversibel aushärtenden, jedoch nicht vernetzenden Systems, dass beim Entkuppeln, bzw. "Zurückschalten" keine Gelpartikel, in Form nicht entnetzter Bestandteile, zurückbleiben. Dem entsprechend sind für das erfindungsgemäße Verfahren einer reversiblen Schaltung zwischen zwei unterschiedlichen thermoplastischen Zuständen eine höhere Anzahl möglicher Zyklen als bei einem reversibel vernetzendem System zu erwarten.

Der Ausdruck Formulierung und sämtliche damit verbundenen prozentualen Angaben beziehen sich in diesem Fall nur auf die Komponenten A und B. Weitere Formulierungsbestandteile, wie sie zum Beispiel in einer Beschichtungs- oder Klebstoffzusammensetzung zugegeben werden können, sind in dieser Betrachtung nicht berücksichtigt. Im Weiteren beschreibt der Ausdruck Formulierung im Rahmen dieser Schrift ausschließlich die Komponenten A und B sowie einen optionalen Vernetzungskatalysator. Der Ausdruck Zusammensetzung dagegen umfasst neben der Formulierung zusätzlich zugegebene Komponenten. Bei diesen zusätzlichen Komponenten kann es sich um spezifisch für die jeweilige Anwendung ausgesuchte Zuschlagsstoffe wie beispielsweise Füllstoffe, Pigmente, Additive, Verträglichkeitsvermittler, Cobindemittel, Weichmacher, Schlagzähmodifier, Verdicker, Entschäumer, Dispergieradditive, Rheologieverbesserer, Haftvermittler, Kratzfestadditive, Katalysatoren oder Stabilisatoren handeln.

Entsprechend der bereits beschriebenen Formulierung werden in dem Verfahren zuerst die Komponenten A und B, sowie optionale weitere Zuschlagsstoffe zusammen gebracht. Bei den Komponenten A und/oder B handelt es sich um zumindest ein Polymere gemäß der weiter oben aufgeführten Auflistung.

Die Kupplungsreaktion kann bei Raumtemperatur innerhalb von 10 min, bevorzugt innerhalb von 5 min, besonders bevorzugt innerhalb von 2 min und ganz besonders bevorzugt innerhalb von einer Minute erfolgen. Zur Beschleunigung der Kupplung kann nach dem Vermischen der Komponenten A und B ein Katalysator zugegeben werden. Bei diesen Katalysatoren handelt es sich in der Regel um starke Säuren wie Trifluoressigsäure oder Schwefelsäure oder um starke LewisSäuren wie z.B. Bortrifluorid, Zinkdichlorid, Titandichlorid-diisopropylat oder Aluminiumtrichlorid.

In einer alternativen Ausführungsform kann die Kupplung auch ohne einen Katalysator, z.B. thermisch, beschleunigt werden. Dabei liegt die Aktivierungstemperatur unterhalb der Temperatur, die für die Retro-(Hetero)-Diels-Alder-Reaktion benötigt wird.

In einer weiteren alternativen Ausführungsform enthält die Formulierung unabhängig von der Aktivierung der Kupplungsreaktion einen weiteren Katalysator, der die Aktivierungstemperatur der Retro-Diels-Alder- bzw. der Retro-Hetero-Diels-Alder-Reaktion absenkt. Bei diesen Katalysatoren kann es sich beispielsweise um Eisen oder eine Eisenverbindung handeln.

Die erfindungsgemäßen Formulierungen bzw. Verfahren können in verschiedensten Anwendungsgebieten zur Verwendung kommen. Die nachfolgende Liste zeigt einige bevorzugte Anwendungsgebiete beispielhaft auf, ohne die Erfindung diesbezüglich in irgendeiner Form einzuschränken. Solche bevorzugten Anwendungsgebiete sind Klebstoffe, Dichtstoffe, Formmassen, Lacke, Farbe, Beschichtungen, Verbundmaterialien, Tinten oder Öladditive wie Fließverbesserer.

Bei diesen Tinten handelt es sich beispielsweise um Zusammensetzungen, die thermisch appliziert werden und auf dem Substrat aushärten. Wenn man leitfähige Oligomere verwendet oder Additive zur Erzeugung einer Leitfähigkeit im Allgemeinen, wird eine elektrisch leitende Tinte erhalten, die z.B. per Bubble-jet - Verfahren verarbeitet werden kann.
Beispiele aus den Anwendungsgebieten Lacke, Beschichtungen und Farbe sind Zusammensetzungen, die z.B. poröse Materialien im niedrigviskosen Zustand besonders gut tränken oder benetzen können und in Folge der Kupplungsreaktion hochkohärente Materialien ergeben. Ähnliche Charakteristika sind von Bedeutung für Klebstoffe, die hohe Kohäsion aufweisen sollten und dennoch leicht die Oberflächen der zu klebenden Materialien benetzen sollen.
Eine weitere Anwendung im Bereich Kleben ist zum Beispiel eine nur temporär benötigte, später wieder zu lösende Fügung, wie sie in verschiedenen Produktionsprozessen zum Beispiel im Automobilbau oder im Maschinenbau vorkommen kann.
Eine andere denkbare Anwendung ist das Verkleben von Bauteilen, die über die Lebensdauer des gesamten Produktes gesehen eine hohe Austauschwahrscheinlichkeit haben, und daher möglichst einfach und rückstandsfrei wieder zu entfernen sein sollten. Ein Beispiel für eine solche Anwendung ist das Verkleben von Automobilfrontscheiben. Weitere Beispiele sind Herstellprozesse im Bereich Elektronik, Informationstechnologie, in der Bau- oder der Möbelindustrie. Eine weitere interessante Anwendung für eine erfindungsgemäße Niedertemperatur-entkupplungen könnte im Bereich der Medizintechnik, insbesondere im Bereich der Orthopädietechnik liegen.

Ein besonderes Beispiel für Kleb- oder Dichtstoffe ist die Verwendung in Lebensmittelverpackungen, die sich beim Aufheizen, beispielsweise in einer Mikrowelle selbsttätig lösen lassen bzw. öffnen.
Ein Beispiel für Anwendungen im Bereich Rapid-Prototyping für die hier beschriebenen vernetzenden und entnetzenden Materialien sind im Bereich FDM (Fused Deposition Modeling) oder beim 3D-Druck per Ink-jet-Verfahren mit niedrigviskosen Schmelzen zu finden.

### Beispiele

Die zahlenmittleren Molekulargewichte Mₙ und der Molekularitätsindex PDI der Polymere wurden mittels GPC (Gelpermeationschromatographie) bestimmt. Die Messungen wurden mit einer PL-GPC 50 Plus der Firma Polymer Laboratories Inc. bei 30 °C in Tetrahydrofuran (THF) gegen eine Serie von Polystyrolstandards durchgeführt (ca. 200 bis 1·10⁶ g/mol).

Die NMR-Analysen wurden auf einem Bruker AM 400 MHz Spektrometer ausgeführt.

Die rheologischen Messungen erfolgen als Platte-Platte Messungen nach ISO6721 Teil 10, Temperaturrampe = 2 K/min. Die Ausgefüllten Messpunkte entsprechen einem Messbereich von -5°C bis +150°C, die nicht ausgefüllten Messpunkte entsprechen einer Messmethodik mit einem Messbereich von 100°C bis 200°C.

### Beispiel 1: Synthese von Bis(bromo)-polymethylmethacrylate

50 Äquivalente Methylmethacrylat (MMA), 1 Äquivalent 1,2-Bis(bromoisobutyryloxy)ethan, 0,105 Äquivalente Kupfer(I)bromid, 0,0125 Äquivalente Kupfer(II)bromid und 0,25 Äquivalente 2,2'-Bipyridin werden in einem 1L-Dreihalkskolben mit Magnetrührer, Stickstoffzuleitung und Rückflusskühler vorgelegt. Es wird soviel Aceton zu der Mischung hinzugefügt, dass 500 mL einer 50 %igen (vol.) Lösung vorliegen. Vorhandener Sauerstoff wird durch 40 minütiges Durchleiten von Stickstoff entfernt. Die Mischung wird darauf unter Stickstoff in einem Ölbad auf 50 °C erhitzt. Nach 2 h Polymerisation wird diese durch Abkühlen in einem Eisbad und Zuleiten von Luftsauerstoff abgebrochen. Der Kupferkartalysator wird mittels Filtration über eine kurze Säule, gefüllt mit neutralem Aluminiumoxid, entfernt. Das Brom-terminierte Poly(methylmethacrylat) (PMMA-Br₂) wird zweimal in kaltem Hexan gefällt, dazwischen wird es in wenig Aceton gelöst. Das Molekulargewicht wird mittels GPC (THF) bestimmt: *M*ₙ = 3500 g·mol⁻¹, *PDI* = 1.2.

### Beispiel 2: Synthese von Bis(cyclopentadienyl)-Polymethylmethacrylat:

1 Äquivalent PMMA-Br₂ aus Stufe 1, 12 Äquivalente Natriumjodid, 4 Äquivalente Tributylphosphan und 8 Äquivalente Nickelocen werden in einem 50 mL-Dreihalskolben mit Magnetrührer, Rückflusskühler und Tropftrichter unter Stickstoff in getrocknetem Tetrahydrofuran (THF) gelöst, so dass 25 mL einer bezogen auf das Polymer 0,1-molaren Lösung gebildet werden. Die Lösung wird 12 Stunden bei Raumtemperatur gerührt, die Reaktionslösung wird anschließend säulenchromatographisch über eine kurze, mit basischem Aluminiumoxid gefüllte Säule gereinigt. Das Cyclopentadienyl-terminierte Poly(methylmethacrylat) (PMMA-Cp₂) wird zweimal in kaltem Hexan gefällt. Die zu über 95% erfolgte zweifache Funktionalisierung mit CyclopentadienylGruppen wird mittels ESI-MS nachgewiesen. Die m/z-Werte sind jeweils um ca. 29,6 g mol⁻¹ gegenüber der Messung des Produktes aus Beispiel 1 kleiner.

### Beispiel 3: Synthese von Br-funktionalem Poly(n-butylacrylat)

80 Äquivalente n-Butylacrylat (nBA), 1 Äquivalent 1,2-Bis(bromoisobutyryloxy)ethan, 0,105 Äquivalente Kupfer(I)bromid, 0,0125 Äquivalente Kupfer(II)bromid und 0,25 Äquivalente 2,2'-Bipyridin werden in einem 1L-Dreihalkskolben mit Magnetrührer, Stickstoffzuleitung und Rückflusskühler vorgelegt. Es wird soviel Aceton zu der Mischung hinzugefügt, dass 500 mL einer 50 Vol%igen Lösung vorliegen. Vorhandener Sauerstoff wird durch 40 minütiges Durchleiten von Stickstoff entfernt. Die Mischung wird darauf unter Stickstoff in einem Ölbad auf 60 °C erhitzt. Nach 3 h Polymerisation wird diese durch Abkühlen auf Raumtemperatur und Zuleiten von Luftsauerstoff abgebrochen. Der Kupferkartalysator wird mittels Filtration über eine kurze Säule, gefüllt mit neutralem Aluminiumoxid, entfernt. Das Brom-terminierte Poly(n-butylacrylat) wird durch Verdampfen des Lösemittels gewonnen. Das Molekulargewicht wird mittels GPC (THF) bestimmt: *M*ₙ = 12000 g·mol⁻¹, *PDI* = 1.3

### Beispiel 4: Synthese von Br-funktionalem Poly(i-bornylmethacrylat-co-butylacrylat):

32 Äquivalente Isobornylacrylat (iBoMA), 25 Äquivalente n-Butylacrylat (nBA), 1 Äquivalent 1,2-Bis(bromoisobutyryloxy)ethan, 0,105 Äquivalente Kupfer(I)bromid, 0,0125 Äquivalente Kupfer(II)bromid und 0,25 Äquivalente 2,2'-Bipyridin werden in einem 1L-Dreihalkskolben mit Magnetrührer, Stickstoffzuleitung und Rückflusskühler vorgelegt. Es wird soviel Aceton zu der Mischung hinzugefügt, dass 500 mL einer 50 Vol%igen Lösung vorliegen. Vorhandener Sauerstoff wird durch 40 minütiges Durchleiten von Stickstoff entfernt. Die Mischung wird darauf unter Stickstoff in einem Ölbad auf 60 °C erhitzt. Nach 3 h Polymerisation wird diese durch Abkühlen auf Raumtemperatur und Zuleiten von Luftsauerstoff abgebrochen. Der Kupferkartalysator wird mittels Filtration über eine kurze Säule, gefüllt mit neutralem Aluminiumoxid, entfernt. Das Brom-terminierte Copolymer wird durch Verdampfen des Lösemittels gewonnen. Das Molekulargewicht wird mittels GPC THF) bestimmt: *M*ₙ = 10000 g·mol⁻¹, *PDI* = 1.3

### Beispiel 5: Synthese von Bis(cyclopentadienyl)-Poly(n-butylacrylat)

1 Äquivalent Polymer aus den Beispielen 3, 6 Äquivalente Natriumjodid, 2 Äquivalente Tributylphosphan und 2 Äquivalente Nickelocen werden in einem 50 mL-Dreihalskolben mit Magnetrührer, Rückflusskühler und Tropftrichter unter Stickstoff in Aceton, so dass 25 mL einer bezogen auf das Polymer 0,1-molaren Lösung gebildet werden. Die Lösung wird 12 Stunden bei Raumtemperatur gerührt, die Reaktionslösung wird anschließend säulenchromatographisch über eine kurze, mit basischem Aluminiumoxid gefüllte Säule gereinigt. Das Cyclopentadienyl-terminierte Polymer wird zweimal in kaltem Ethanol durch Zugabe von Wasser gefällt. Die Umsetzung von über 90% der Br-Endgruppen zu Cp-Endgruppen wurde per Kernresonanzspektroskopie nachgewiesen werden.

### Beispiel 6: Synthese von Bis(cyclopentadienyl)-Poly(i-bornylmethacrylat-co-butylacrylat)

Die Umsetzung des Polymers aus Beispiel 4 erfolgt analog zu Beispiel 5. Die Umsetzung erfolgte gleichfalls zu über 90%.

### Beispiel 7: Synthese von Phophor-Dithioester (PDI)

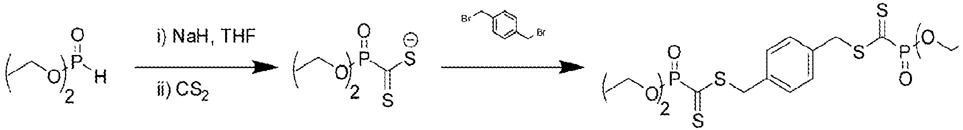

Eine Lösung von Diethylphosphit (5,3 mL, 41,2 mmol) in trockenem THF (20 mL) wird zu einer Suspension von Natriumhydrid (1,64 g, 41,2 mmol) in THF (40 mL) in einem Zweihalskolben mit Rückflusskühler und Magnetrührer langsam unter Stickstoffatmosphäre zugetropft.

Nachdem die Entwicklung von Wasserstoff beendet ist, wird die Mischung für 10 Minuten refluxiert. Nach dem Abkühlen auf Raumtemperatur wird die Reaktionsmischung weiter in einem Kältebad aus Aceton und flüssigem Stickstoff bei -20°C gekühlt während Schwefelkohlenstoff (12,26 mL, 203,6 mmol) tropfenweise hinzugegeben wurde. Nach beendeter Zugabe wird die Mischung über 30 Minuten auf Raumtemperatur aufgetaut. Zu dieser Mischung wird in der Folge eine Lösung von 1,4-Bis(bromomethylbenzol) (5,44 g) in trockenem THF (40 mL) tropfenweise bei Raumtemperatur zugegeben und für weitere drei Stunden gerührt. 200 mL Hexan werden anschließend zugegeben und die Mischung filtriert. Das violette Filtrat wird aufgefangen und die Lösungsmittel unter Vakuum entfernt. Die Aufreinigung des Produktes erfolgt durch Säulenchromatographie über Silica mit Hexan und Essigester als Eluentien. Die zweite violette Fraktion wird als Produktfraktion aufgefangen und vom Lösungsmittel befreit. Die Reinheit beträgt nach Kernresonanzspektroskopie >95%.
¹H NMR (250 MHz, CDCl₃, 25 °C) : *δ* = 7.20 (s, 4H), 4.40 (s, 4H), 4.30-4.11 (m, 8H), 1.27 (t, *J* = 7 Hz, 12 H).

### Beispiel 8: Umsetzung mit Dithioester-Linker (PDI)

Es wird unter Rühren eine 50 Gew%ige Lösung von einem Teil Cp-funktionalisiertem Polymer aus Beispiel 5 versetzt mit einem Teil der Dithioester-Verbindung aus Beispiel 7 in Dichlormethan hergestellt, sodass 20 mL der Lösung erhalten werden. Die Mischung wird eine Stunde bei Raumtemperatur gerührt und das Lösemittel hiernach unter Vakuum entfernt.

### Beispiel 9 Umsetzung mit BMI-Linker

Das Polymer aus Beispiel 6 wird unter Rühren eine 50 Gew%ige Lösung von einem Teil Cp-funktionalisiertem Polymer versetzt mit einem Teil des Bismaleinimids in Dichlormethan hergestellt sodass 20 mL der Lösung erhalten werden. Die Mischung wird mit einem Teil ZnCl₂ versetzt, 2 h bei Raumtemperatur gerührt und das Lösemittel hiernach unter Vakuum entfernt.

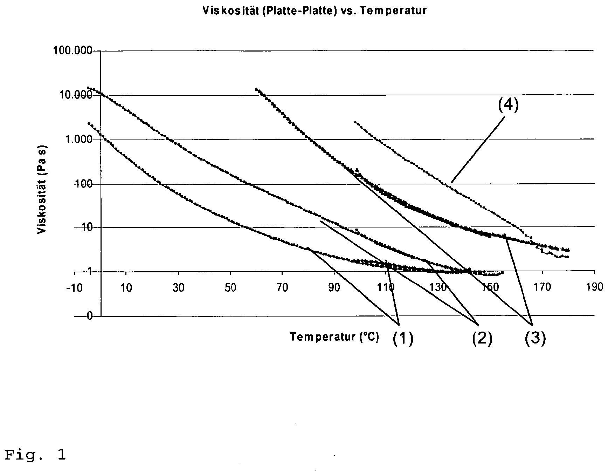

### Beschriftung der Zeichnung Fig.1:

In Fig.1 ist der Zusammenhang der Viskosität zur Temperatur über die oben beschriebene Platte-Platte-Viskositätsmessung dargestellt. Im Einzelnen finden sich folgende Kurven:
(1) Material gemäß Beispiel 5
(2) Material gemäß Beispiel 8
(3) Material gemäß Beispiel 6
(4) Material gemäß Beispiel 9

Der Effekt der schaltbaren Viskosität ist in den Messkurven der Viskosität der Materialien über den dargestellten Temperaturbereich erkennbar. Die Messkurven der Beispiele 5 und 6 stellen die nicht verknüpften niedermolekularen Polymere der Beispiele 8 und 9 dar. Zu erkennen ist die erfolgreiche Kettenverknüpfung der Materialien in den Beispielen 8 und 9 an der um Faktor 10 erhöhten Viskosität zu Beginn der Messkurven bei niederen Temperaturen. Dieser Viskositätsunterschied verliert sich ab der Temperatur, ab welcher die Retro-HDA-Reaktion eintritt, d.h. die gebildeten Kettenverknüpfungen gebrochen werden. Ab diesem Punkt verringert sich die Viskosität der Polymere überproportional bis sie die Viskosität der Ausgangsmaterialien Beispiele 5 und 6 erreichen.

## Patentansprüche

1. Reversibel schaltbare Formulierung, **dadurch gekennzeichnet, dass** die Formulierung mittels einer Diels-Alder- oder einer Hetero-Diels-Alder-Reaktion schaltbar ist, dass die Formulierung eine Komponente A enthält, die zwei dienophile Doppelbindungen aufweist, dass die Formulierung eine Komponente B enthält, die zwei Dien-Funktionalitäten aufweist, dass mindestens eine der Komponenten A oder B als Polymer vorliegt, und dass die Formulierung bei Raumtemperatur hochmolekulare Polymerketten bildet und die hochmolekularen Polymerketten bei einer höheren Temperatur zu mindestens 50% wieder zu den Edukten und/oder zu kürzeren Kettensegmenten abgebaut werden, und dass es sich bei dem Dienophil um eine Verbindung mit einer Kohlenstoff-Schwefel-Doppelbindung handelt.

2. Formulierung gemäß Anspruch 1, **dadurch gekennzeichnet, dass** es sich bei dem Dienophil um einen Dithioester handelt.

3. Formulierung gemäß Anspruch 2, **dadurch gekennzeichnet, dass** es sich bei dem Dienophil um eine Verbindung mit der Struktur 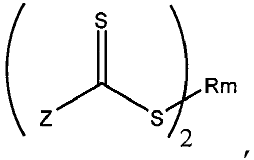 wobei es sich bei Z um eine Elektronen-ziehende Gruppe und bei R^{m} um eine mehrbindige organische Gruppe oder um ein Polymer handelt.

4. Formulierung gemäß Anspruch 3, **dadurch gekennzeichnet, dass** es sich bei der Gruppe Z um eine 2-Pyridylgruppe handelt.

5. Formulierung gemäß Anspruch 1, **dadurch gekennzeichnet, dass** es sich bei den Komponenten A und B jeweils um ein Polymer handelt, und dass es sich bei diesen Polymeren um gleiche oder verschiedene Polymere handeln kann.

6. Formulierung gemäß mindestens einem der Ansprüche 1 bis 5, **dadurch gekennzeichnet, dass** es sich bei den Polymeren um Polyacrylate, Polymethacrylate, Polystyrole, Mischpolymerisate aus Acrylaten, Methacrylaten und/oder Styrolen, Polyacrylnitril, Polyether, Polyester, Polymilchsäuren, Polyamide, Polyesteramide, Polyurethane, Polycarbonate, amorphe oder teilkristalline Poly-α-Olefine, EPDM, EPM, hydrierte oder nicht hydrierte Polybutadiene, ABS, SBR, Polysiloxane und/oder Block-, Kamm- und/oder Sterncopolymeren dieser Polymere handelt.

7. Formulierung gemäß mindestens einem der Ansprüche 1 bis 6, **dadurch gekennzeichnet, dass** es sich bei Komponente B um ein mittels ATRP hergestelltes, bifunktionelles Polymer handelt, und dass die Funktionalisierung mit den Diengruppen durch Substitution endständiger Halogenatome erfolgte.

8. Formulierung gemäß mindestens einem der Ansprüche 1 bis 7, **dadurch gekennzeichnet, dass** es sich bei der Komponente A um eine niedermolekulare organische Verbindung mit 2 Dithioestergruppen gemäß Anspruch 3 handelt, und dass es sich bei der Gruppe Z um eine 2-Pyridylgruppe, eine Phosphorylgruppe oder eine Sulfonylgruppe handelt.

9. Verfahren zur reversiblen Schaltung,
**dadurch gekennzeichnet, dass** eine Formulierung aus zumindest zwei unterschiedlichen Komponenten A und B, mittels einer Diels-Alder- bzw. einer Hetero-Diels-Alder-Reaktion bei Raumtemperatur unter Zunahme des Molekulargewichts gekuppelt wird und bei einer höheren Temperatur mindestens 50% der Kupplungsstellen mittels einer Retro-Diels-Alder- oder einer Retro-Hetero-Diels-Alder-Reaktion wieder gelöst werden, und dass es sich bei Komponente A um eine Verbindung mit einer Kohlenstoff-Schwefel-Doppelbindung handelt.

10. Verfahren gemäß Anspruch 9, **dadurch gekennzeichnet,**
**dass** es sich bei den Komponenten A und/oder B um Polymere gemäß Anspruch 5 oder 6 handelt.

11. Verfahren gemäß zumindest einem der Ansprüche 9 bis 10, **dadurch gekennzeichnet, dass** die Zunahme des Molekulargewichts nach dem Vermischen der Komponenten A und B innerhalb von 2 min erfolgt.

12. Verfahren gemäß zumindest einem der Ansprüche 9 bis 10, **dadurch gekennzeichnet, dass** dass die Zunahme des Molekulargewichts nach dem Vermischen der Komponenten A und B mit einem Katalysator innerhalb von 2 min erfolgt.

13. Verwendung einer Formulierung gemäß zumindest einem der Ansprüche 1 bis 8 in Klebstoffen, Dichtstoffen, Formmassen, Lacken, Farben, Beschichtungen, Öladditive, Tinten oder Verbundmaterialien.

## Claims

1. Reversibly switchable formulation, **characterized in that** the formulation can be switched by means of a Diels-Alder reaction or hetero-Diels-Alder reaction, **in that** the formulation comprises a component A which has two dienophilic double bonds,
**in that** the formulation comprises a component B which has two diene functionalities,
**in that** at least one of the components, A or B, is present as a polymer,
and **in that** the formulation forms high-molecular polymer chains at room temperature and at a higher temperature the high-molecular polymer chains are broken back down to the reactants and/or to shorter chain segments to an extent of at least 50% and **in that** the dienophile is a compound having a carbon-sulphur double bond.

2. Formulation according to Claim 1, **characterized in that** the dienophile is a dithioester.

3. Formulation according to Claim 2, **characterized in that** the dienophile is a compound having the structure 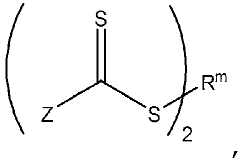 where Z is an electron-withdrawing group and R^{m} is a polyvalent organic group or a polymer.

4. Formulation according to Claim 3, **characterized in that** the group Z is a 2-pyridyl group.

5. Formulation according to Claim 1, **characterized in that** components A and B are each a polymer, and **in that** these polymers may be identical or different polymers.

6. Formulation according to at least one of Claims 1 to 5, **characterized in that** the polymers are polyacrylates, polymethacrylates, polystyrenes, copolymers of acrylates, methacrylates and/or styrenes, polyacrylonitrile, polyethers, polyesters, polylactic acids, polyamides, polyesteramides, polyurethanes, polycarbonates, amorphous or partially crystalline poly-α-Olefins, EPDM, EPM, hydrogenated or unhydrogenated polybutadienes, ABS, SBR, polysiloxanes and/or block, comb and/or star copolymers of these polymers.

7. Formulation according to at least one of Claims 1 to 6, **characterized in that** component B is a difunctional polymer prepared by means of ATRP and **in that** the functionalization with the diene groups has taken place through substitution of terminal halogen atoms.

8. Formulation according to at least one of Claims 1 to 7, **characterized in that** component A is a low molecular mass organic compound having 2 dithioester groups according to Claim 3, and **in that** the group Z is a 2-pyridyl group, a phosphoryl group or a sulphonyl group.

9. Process for reversible switching, **characterized in that** a formulation comprising at least two different components A and B is coupled by means of a Diels-Alder reaction or hetero-Diels-Alder reaction at room temperature with an increase in the molecular weight and at a higher temperature at least 50% of the couplings are undone by means of a retro-Diels-Alder reaction or retro-hetero-Diels-Alder reaction and **in that** component A is a compound having a carbon-sulphur double bond.

10. Process according to Claim 9, **characterized in that** components A and/or B are polymers according to Claim 5 or 6.

11. Process according to at least one of Claims 9 and 10, **characterized in that** the increase in molecular weight takes place within 2 minutes after the mixing of components A and B.

12. Process according to at least one of Claims 9 and 10, **characterized in that** the increase in molecular weight takes place within 2 minutes after the mixing of components A and B with a catalyst.

13. Use of a formulation according to at least one of Claims 1 to 8 in adhesives, sealants, moulding compounds, varnishes, paints, coatings, oil additives, inks or composite materials.

## Revendications

1. Composition apte à être convertie de façon réversible, **caractérisée en ce que** la composition est apte à être convertie par une réaction de Diels-Alder ou une réaction d'hétéro-Diels-Alder,
**en ce que** la composition contient un composant A qui comporte deux doubles liaisons diénophiles,
**en ce que** la composition contient un composant B qui comporte deux fonctionnalités diène,
**en ce qu'**au moins un des composants A et B se trouve sous forme de polymère,
et **en ce que** la composition forme à la température ambiante des chaînes polymères de masse moléculaire élevée et les chaînes polymères de masse moléculaire élevée sont à raison d'au moins 50 % de nouveau dégradées en les produits de départ et/ou en segments de chaîne plus courts,
et **en ce que** pour ce qui est du diénophile il s'agit d'un composé comportant une double liaison carbone-soufre.

2. Composition selon la revendication 1, **caractérisée en ce que** pour ce qui est du diénophile il s'agit d'un dithioester.

3. Composition selon la revendication 2, **caractérisée en ce que** pour ce qui est du diénophile il s'agit d'un composé ayant la structure 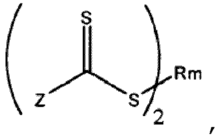 dans laquelle Z représente un groupe attirant les électrons et R^{m} représente un groupe organique à plusieurs liaisons ou un polymère.

4. Composition selon la revendication 3, **caractérisée en ce que** le groupe Z représente un groupe 2-pyridyle.

5. Composition selon la revendication 1, **caractérisée en ce que** pour ce qui est des composants A et B, il s'agit dans chaque cas d'un polymère et **en ce que** ces polymères peuvent consister en des polymères identiques ou différents.

6. Composition selon au moins l'une quelconque des revendications 1 à 5, **caractérisée en ce que** pour ce qui est des polymères il s'agit de polyacrylates, de polyméthacrylates, de polystyrènes, de copolymérisats d'acrylates, méthacrylates et/ou styrènes, de polyacrylonitrile, de polyéthers, polyesters, poly(acide lactique)s, polyamides, polyesteramides, polyuréthanes, polycarbonates, poly-α-oléfines amorphes ou partiellement cristallines, EPDM, EPM, polybutadiènes hydrogénés ou non hydrogénés, ABS, SBR, polysiloxanes et/ou de copolymères en blocs, peigne et/ou étoile de ces polymères.

7. Composition selon au moins l'une quelconque des revendications 1 à 6, **caractérisée en ce que** pour ce qui est du composant B il s'agit d'un polymère bifonctionnel produit par ATRP, et **en ce que** la fonctionnalisation avec les groupes diène a été effectuée par remplacement d'atomes d'halogène en bout de chaîne.

8. Composition selon au moins l'une quelconque des revendications 1 à 7, **caractérisée en ce que** pour ce qui est du composant A il s'agit d'un composé organique de faible masse moléculaire comportant 2 groupes dithioester selon la revendication 3, et **en ce que** le groupe Z consiste en un groupe 2-pyridyle, un groupe phosphoryle ou un groupe sulfonyle.

9. Procédé pour la conversion réversible, **caractérisée en ce qu'**on assemble par couplage une composition à partir d'au moins deux composants A et B différents, par une réaction de Diels-Alder ou une réaction d'hétéro-Diels-Alder, à la température ambiante, avec augmentation de la masse moléculaire, et à une température plus élevée au moins 50 % des sites de couplage sont de nouveau résolus par une réaction de rétro-Diels-Alder ou une réaction de rétro-hétéro-Diels-Alder, et **en ce que** pour ce qui est du composant A il s'agit d'un composé comportant une double liaison carbone-soufre.

10. Procédé selon la revendication 9, **caractérisé en ce que** pour ce qui est du composant A et/ou du composant B il s'agit de polymères selon la revendication 5 ou la revendication 6.

11. Procédé selon au moins l'une quelconque des revendications 9 et 10, **caractérisé en ce que** l'augmentation de la masse moléculaire après le mélange des composants A et B s'effectue en l'espace de 2 minutes.

12. Procédé selon au moins l'une quelconque des revendications 9 et 10, **caractérisé en ce que** l'augmentation de la masse moléculaire après le mélange des composants A et B s'effectue en l'espace de 2 minutes avec un catalyseur.

13. Utilisation d'une composition selon au moins l'une quelconque des revendications 1 à 8, dans des adhésifs, des matières d'étanchéité, des matières à mouler, des laques, des peintures, des revêtements, des additifs pour huiles, des encres ou des matériaux composites.
